# EUROPEAN PATENT SPECIFICATION

(11) **EP 4 554 804 B1**
(45) Date of publication and mention of the grant of the patent: **22.04.2026**
(21) Application number: 23742147.4
(22) Date of filing: 07.07.2023
(51) Int. Cl.: B60K 7/00, B60K 17/04, B60K 17/30

(54) **APPLIANCE WITH MOTORIZED WHEELS**
GERÄT MIT MOTORISIERTEN RÄDERN
APPAREIL AVEC ROUES MOTORISÉES

(30) Priority: 11.07.2022 IT 202200014533
(43) Date of publication of application: 21.05.2025
(73) Proprietor: Borghi Assali S.r.l., 41030 Bomporto (MO) (IT)
(72) Inventor: BORGHI, Ivan, 41030 Bomporto (MO) (IT)
(74) Representative: Luppi, Emanuele
(86) International application number: PCT/IB2023/057028
(87) International publication number: WO 2024/013624

(56) References cited:
- EP-A1- 3 632 729
- EP-B1- 3 068 649
- WO-A1-2019/116193
- DE-U1- 202020 101 616

## Description

### Technical Field

The present invention relates to an appliance with motorized wheels adaptable in vehicles which can be used, e.g., in the military and agricultural field as well as in the heavy-duty transport.

### Background Art

Motorized wheels for vehicles such as forklift trucks or heavy-duty vehicles are known, each consisting of a wheel and a gearmotor.

In actual facts, the carriage is provided with four wheels which can be driven independently by respective motors directly connected to the axle of the wheels and arranged alongside them.

In detail, the motors are arranged on the inner side of the wheels facing the carriage bedplate.

Although the introduction of the motorized wheels, by eliminating the use of axles, has freed up space within the bedplate which can be used either to hold other components or to make maintenance easier, nevertheless the current solution is unsatisfactory.

In fact, due to the fact that the motors associated with the wheels have quite large overall dimensions, the lateral extension of the bedplate where the wheel pairs are located is nevertheless very limited due the fact that special spaces must be provided to freely accommodate the motors themselves.

Another drawback lies in the fact that known motorized wheels, when used in vehicles to carry heavy loads, must be large with wide and high tires, resulting in a very high center of gravity of the load.

An additional drawback is due to the fact that motorized wheels of known type have proven to be inefficient in use on uneven ground.

To solve, at least partly, the aforementioned drawbacks, the use of motorized wheels built in accordance with the teachings contained in patent EP3068649B1 is known.

Specifically, within this document is described an appliance with motorized wheels substantially provided with:
- a first and a second wheel;
- a motor connected to the first wheel for its rotational drive;
- a gearbox operatively placed between the motor and the first wheel;
- a main body defining a motor housing and comprising a weight bearing portion of the second wheel;
- a supporting structure connected to the main body and provided with steering means of the wheels around a vertical axis.

In this regard, the aforementioned patent teaches how to connect the supporting structure to the main body by means of a hinge having a axis of rotation which is horizontal and orthogonal to the common axis of rotation of the wheels.

The technical effect derived from such teaching is that vehicles provided with an appliance manufactured in this way are particularly stable while driving, even if the same run on rough and/or uneven stretches of ground.

The wheels substantially not only steer around a vertical axis, but also oscillate around a horizontal axis, and thus manage to adhere to the ground no matter how uneven and/or sloping it may be.

As mentioned above, the main body comprises a supporting portion by weight of the second wheel; however, as for the first wheel, the document under review suggests mounting it directly on the gearbox.

In this regard, it is worth explaining that the specific construction of the appliance from patent EP3068649B1, that is, where the motor and gearbox are placed inside the wheels, makes it possible to remedy at least partly some of the problems complained of above.

First of all, such a construction expedient makes it possible to lower the center of gravity of the load, since the heaviest parts (i.e., the motor and the gearbox) are closer to the ground.

It is immediate to appreciate how this benefits the overall stability of the vehicle and reduces, in particular, the risk of vehicle roll and tip-over when cornering.

Not only that, but this same expedient also makes it possible to mount the appliance on vehicles whose bedplate lacks a space to freely accommodate the motor where the wheel housing is located.

Although the appliance described in patent EP3068649B1 allows achieving the advantages just discussed, nevertheless it is amenable to some refinements.

First of all, it is worth highlighting the fact that while mounting the first wheel directly on the gearbox allows, on the one hand, for a reduction in the overall dimensions, this choice results, on the other hand, in a significant loading by weight of the gearbox itself, which puts the structural integrity of its most fragile components at serious risk.

It is easy to appreciate how this fact forces, in order not to face the replacement of damaged or broken parts, to reduce the maximum load bearing on the wheels, at the cost, however, of severely limiting the appliance's versatility of use.

In other words, the appliance described in patent EP3068649B1 is found to be profitably usable only under a rather limited set of conditions of use, that is, those wherein the vehicle, with the wheel diameter being equal, exerts a small load on the appliance or in which the wheels, with the load exerted by the vehicle being equal, have a larger diameter.

That said, appliances with motorized wheels marked by a similar construction to that of document EP3068649B1 and comprising, arranged in its respective housing, a special electric motor provided with an external aluminum case housing the stator and rotor within it, are also known and widespread in the market.

It should be explained, however, that such known appliances do not allow remedying the structural fragility problem that troubles patent EP3068649B1, and are themselves improvable.

In fact, the electric motor with which the aforementioned appliances are provided is, due to the thickness of its outer aluminum case, rather bulky, thus forcing the relevant housing where it is arranged to be oversized.

It is immediate to understand, in this regard, how excessively bulky appliances end up not only raising the center of gravity of the vehicle, but also significantly worsening the drivability of the same on uneven ground and/or with gradients, giving rise to the aforementioned problems that trouble the first type of appliance described.

### Description of the Invention

The main aim of the present invention is to devise an appliance with motorized wheels of simple, sturdy and compact construction that enables it, with the same overall dimensions, to bear greater vertical loads than the prior art mentioned above.

Another object of the present invention is to devise an appliance with motorized wheels which can overcome the aforementioned drawbacks of the prior art within the framework of a simple, rational, easy and efficient to use as well as cost-effective solution.

The above objects are achieved by this appliance with motorized wheels having the characteristics of claim 1.

### Brief Description of the Drawings

Other characteristics and advantages of the present invention will become more apparent from the description of a preferred, but not exclusive, embodiment of an appliance with motorized wheels, illustrated by way of an indicative, yet non-limiting example, in the accompanying tables of drawings in which:
Figures 1 and 2 are axonometric views of the appliance according to the invention from two different angles;

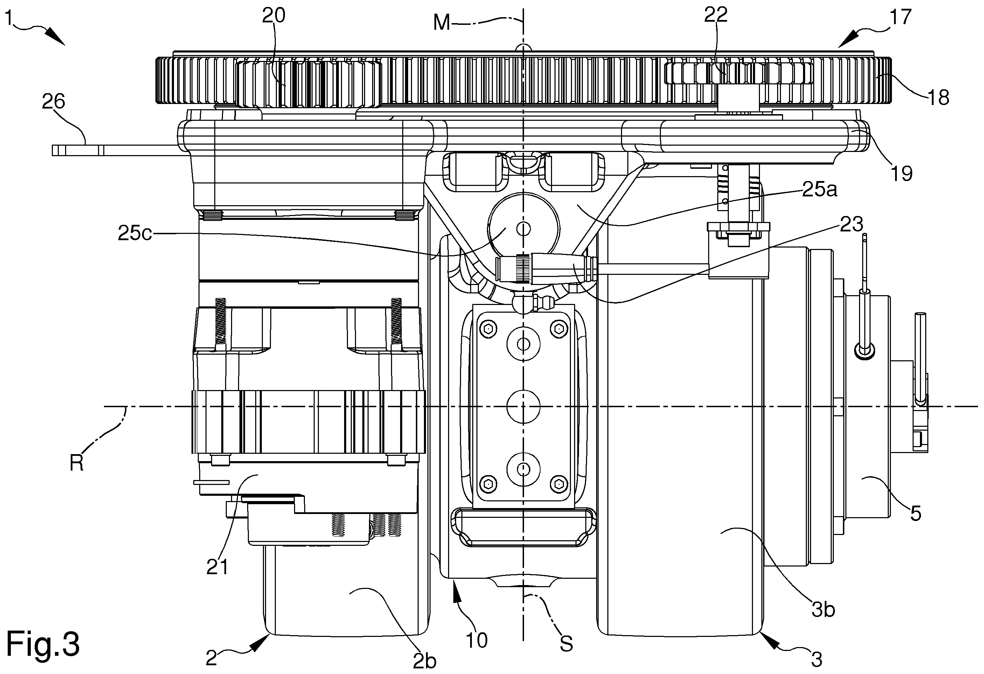

Figure 3 is a front view of the appliance according to the invention;
Figure 4 is a cross-sectional view of Figure 3;
Figure 5 is an exploded view of the appliance according to the invention;
Figure 6 is an axonometric view of a detail of the appliance according to the invention;
Figure 7 is an exploded view of Figure 6;
Figure 8 is a front view of a detail in Figure 7.

### Embodiments of the Invention

With particular reference to these figures, reference numeral 1 globally denotes an appliance with motorized wheels.

As a first step, it is specified that the appliance 1 is installable on vehicles provided with wheels, motorized or not, belonging to the prior art.

Specifically, it is possible to remove the wheels from the vehicle and install, in their place, a corresponding number of appliances 1.

For example, in the case of a vehicle provided with three or four wheels (e.g., a work vehicle of the type of an AGV - automated guided vehicle), three or four appliances 1 according to the invention (or even less, e.g., in the case where it is necessary to motorize only one part of the wheels and leave the others idle) can be mounted instead of the wheels.

That being said, the appliance 1 with motorized wheels comprises at least one pair of wheels 2, 3 axially rotatable around at least one axis of rotation R.

In particular, the axis of rotation R is arranged substantially horizontal in a configuration of use of the appliance 1.

It should be noted that the term "axially" refers to the axis around which the rotation of the wheels 2, 3 results in the forward/backward movement of the same on the ground.

The wheels 2, 3 comprise at least one first wheel 2 and at least one second wheel 3.

In detail, the first wheel 2 comprises at least a first rim 2a and at least a first tire 2b, intended to contact onto the ground, wrapped around the first rim 2a.

For example, the first rim 2a can be made of one or more metal materials, while the first tire 2b can be made of rubber or functionally similar materials.

Similarly to the first wheel 2, the second wheel 3 comprises at least a second rim 3a and at least a second tire 3b, intended to contact onto the ground, wrapped around the second rim 3a.

Again, the second rim 3a can, e.g., be made of one or more metal materials, while the second tire 3b can be made of rubber or functionally similar materials. The first rim 2a and the first tire 2b are substantially structurally and functionally identical to the second rim 3a and to the second tire 3b, respectively.

Regarding the arrangement of the wheels 2, 3, they are preferably parallel to each other and aligned along the axis of rotation R.

In actual facts, the axis of rotation R passes through both centers of the wheels 2, 3.

In addition, the appliance 1 comprises at least one gearmotor 4, 6 operatively associated with at least the first wheel 2 for rotational drive.

To this regard, it is specified that, in accordance with the preferred embodiment, only the first wheel 2 is motorized, while the second wheel 3 is idle.

In other words, the second wheel 3 rotates as a result of its being dragged by the first wheel 2, which is driven by the gearmotor 4, 6 (and is, therefore, driving).

That being said, however, alternative embodiments of the appliance 1 cannot be ruled out wherein both wheels 2, 3 are motorized and, therefore, driving.

The gearmotor 4, 6 comprises, first of all, at least one motor 4.

In particular, the motor 4 is preferably of the type of an electric motor.

In this sense, the motor 4 comprises at least one stator 4a, at least one rotor 4b, rotatable around the axis of rotation R, and at least one outer case 4c housing the stator 4a and the rotor 4b.

According to the preferred embodiment, the motor 4 has power of 2 kW and rotates at 3200 rpm.

Specifically, the motor 4 of the preferred embodiment is of the type of an AC brushless electric motor.

The choice of such a specific type of motor 4 allows providing numerous operational benefits, the main ones of which are listed below.

First of all, the efficiency and reliability of such a type of motor 4 are notoriously high, and thus allow the wheels 2, 3 to be controlled with absolute precision at both low and high angular speeds of the wheels.

Secondly, the construction of such a motor 4 means that its wear rate is extremely low and, with it, the frequency with which it requires maintenance.

Thirdly, such a motor 4 can also be operated at quite high speeds, making it particularly versatile.

Last but not least, the motor 4 is very quiet during its operation.

It is easy to appreciate how the characteristics just described operate in conjunction with each other in making the appliance 1 very reliable and suitable for use in numerous conditions of use.

Having said all this, the use of a different type of motor 4 cannot however be ruled out, such as e.g. of the electric brush type (so-called "brushed"), or the hydraulic type, or another type still known to the expert in the field.

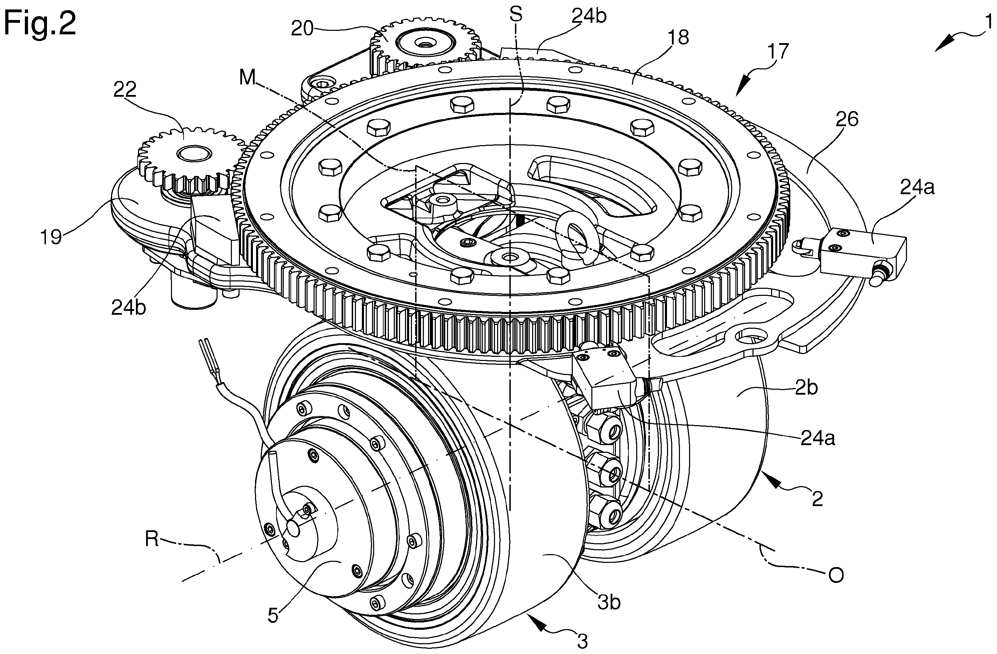

To regulate the operation of the motor 4, the appliance 1 comprises braking means 5, operatively associated with the motor 4, shown in Figures 2, 4 and 5.

As visible, the braking means 5 are arranged where the second wheel 3 is located.

In more detail, the braking means 5 protrude laterally from the second wheel 3.

In this regard, it should be pointed out that, as can be seen by observing the figures, the size of the braking means 5 is rather small.

It follows that the braking means 5 do not contribute significantly to the overall dimensions of the appliance 1 which, as will be evident later in this disclosure, is instead particularly compact and, at the same time, robust.

Preferably, the braking means 5 are of the electromagnetic type.

Then, the gearmotor 4, 6 comprises at least one reduction unit 6 positioned between the motor 4 and the first wheel 2.

The reduction unit 6 allows the angular speed of the first wheel 2 to be reduced with respect to that of the motor 4 by a quantity corresponding to its transmission ratio (i.e., at higher/less transmission ratios there is a proportionally higher/less reduction).

In the present case, the reduction unit 6 comprises at least one primary reduction stage 7 of the type of a planetary gear provided with:
- at least one primary sun gear 7a operatively connected to the motor 4 and rotatable around the axis of rotation R;
- at least one primary crown gear 7b fixed in rotation and coaxial to the primary sun gear 7a;
- at least one primary satellite 7c which meshes with the primary sun gear 7a and with the primary crown gear 7b; and with
- at least one primary satellite carrier 7d, rotatable around the axis of rotation R and supporting the primary satellite 7c, connected to the first wheel 2 via motion transmission means 8.

Specifically, the primary sun gear 7a, the primary crown gear 7b and the primary satellite 7c are gear wheels.

Regarding, in particular, the primary crown gear 7b, it has a larger diameter than the primary sun gear 7a and the primary satellite 7c.

Again, the primary crown gear 7b has inner gearing.

In this regard, the primary crown gear 7b has a number of teeth equal to 93.

It is important to specify, then, that the primary sun gear 7a and the primary crown gear 7b are centered on the axis of rotation R.

The primary sun gear 7a, the primary crown gear 7b and the primary satellite 7c mesh with each other to define at least one transmission ratio value between the input (i.e., the primary sun gear 7a) and the output (i.e., the primary satellite carrier 7d).

Such a configuration, i.e. wherein the primary sun gear 7a is the input and the primary satellite carrier 7d is the output, is made possible by the fact that the primary crown gear 7b is fixed in rotation, while the primary sun gear 7a and the primary satellite 7c rotate around the axis of rotation R.

Precisely, the primary sun gear 7a rotates only around the axis of rotation R, while the primary satellite 7c rotates both axially and around the axis of rotation R.

Detailing more about the primary satellite carrier 7d as well, it is good to say that it is a solid body substantially with a right cylinder shape.

The primary satellite carrier 7d, as well as the primary sun gear 7a and the primary crown gear 7b, is also centered on the axis of rotation R.

In accordance with the preferred embodiment, the primary reduction stage 7 comprises three primary satellites 7c substantially identical to each other and simultaneously meshing with the primary sun gear 7a.

Specifically, the three primary satellites 7c are arranged symmetrically around the primary sun gear 7a.

In this sense, the primary satellites 7c are positioned at constant and substantially equal angular distances of 120° from each other.

The possibility of providing for a different number of primary satellites 7c, e.g., a greater number, cannot however be ruled out.

In this case, it is possible to place the various primary satellites 7c around the primary sun gear 7a at constant angular distances from each other.

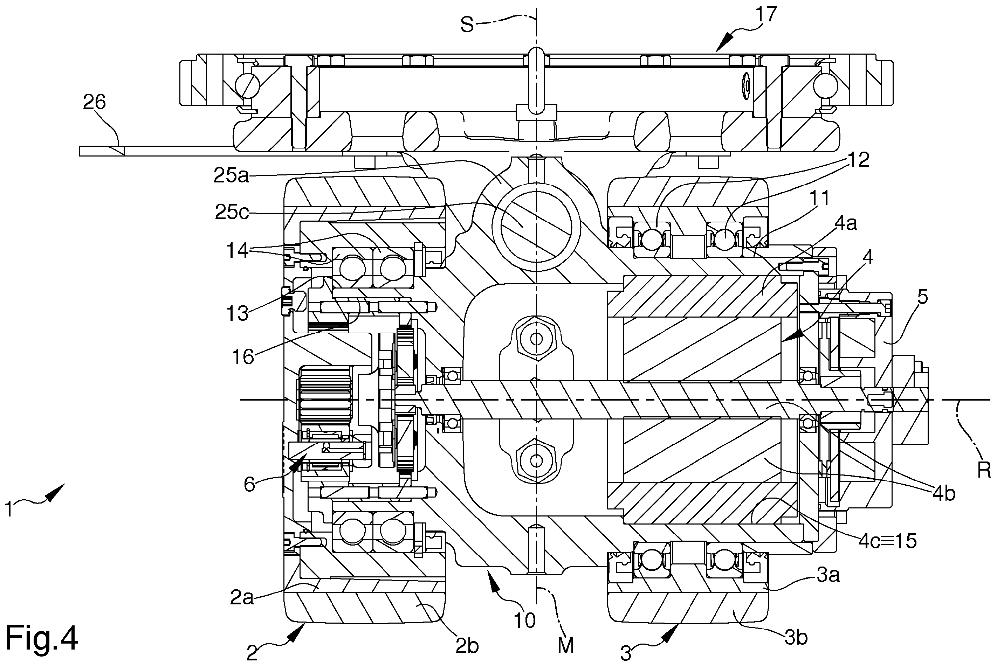

Conveniently, the reduction unit 6 comprises at least one secondary reduction stage 8 of the type of a planetary gear, shown in Figures 4, 6 and 7.

Specifically, the secondary reduction stage 8 coincides with the motion transmission means 8 and is operatively placed between the primary reduction stage 7 and the first wheel 2.

More specifically, the secondary reduction stage 8 is provided with:
- at least one secondary sun gear 8a locked together with the primary satellite carrier 7d;
- at least one secondary crown gear 8b fixed in rotation and coaxial to the secondary sun gear 8a;
- at least one secondary satellite 8c which meshes with the secondary sun gear 8a and with the secondary crown gear 8b; and with
- at least one secondary satellite carrier 8d, rotatable around the axis of rotation R and supporting the secondary satellite 8c, connected to the first wheel 2.

Specifically, the secondary sun gear 8a, the secondary crown gear 8b and the secondary satellite 8c are gear wheels.

Regarding, in particular, the secondary crown gear 8b, it has a larger diameter than the secondary sun gear 8a and the secondary satellite 8c.

Again, the secondary crown gear 8b has inner gearing.

More specifically, the number of teeth in the secondary crown gear 8b is 64.

In addition, the number of teeth of the secondary satellite 8c is 16.

The secondary sun gear 8a, the secondary crown gear 8b and the secondary satellite 8c mesh with each other to define at least one transmission ratio value between the input (i.e., the secondary sun gear 8a) and the output (i.e., the secondary satellite carrier 8d).

Such a configuration, i.e., wherein the secondary sun gear 8a is the input and the secondary satellite carrier 8d is the output, is made possible by the fact that secondary crown gear 8b is fixed in rotation, while the secondary sun gear 8a and the secondary satellite 8c rotate around the axis of rotation R.

Precisely, the secondary sun gear 8a rotates only around the axis of rotation R, while the secondary satellite 8c rotates both axially and around the axis of rotation R.

In actual facts, the operation of the secondary reduction stage 8 is quite similar to that of the primary reduction stage 7.

From this it follows that, given the number of teeth of the secondary crown gear 8b and of the secondary satellite 8c mentioned earlier, the transmission ratio defined by the secondary reduction stage 8 alone is approximately 4.88, and that, therefore, such is the angular speed reduction from the secondary sun gear 8a to the secondary satellite carrier 8d.

It is worth noting that the output of the primary reduction stage 7 (i.e., the primary satellite carrier 7d) coincides with the input of the secondary reduction stage 8 (i.e., the secondary sun gear 8a).

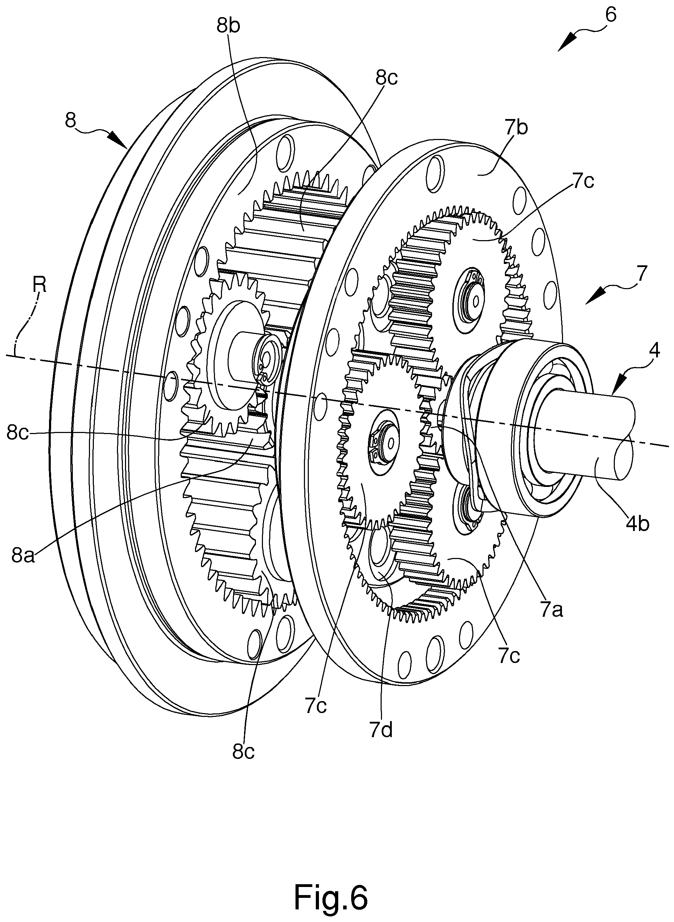

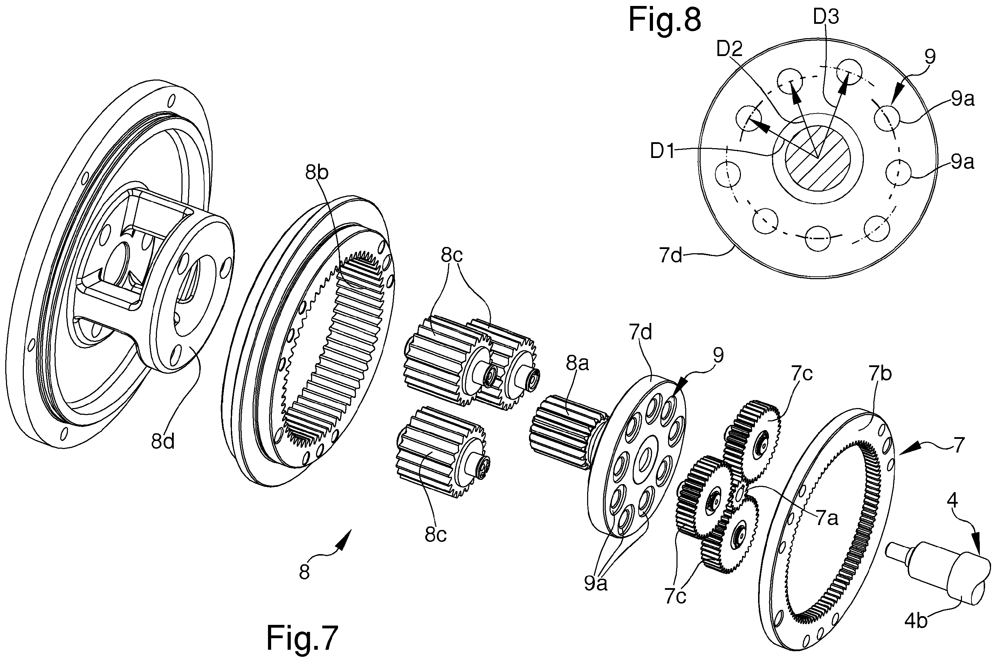

In this regard, as visible in Figures 6 and 7, the secondary sun gear 8a and the primary satellite carrier 7d are preferably made as a single monolithic body.

Therefore, the rotational speed of the primary satellite carrier 7d coincides with that of the secondary sun gear 8a.

Conveniently, the secondary reduction stage 8 comprises three secondary satellites 8c which are substantially identical and simultaneously meshing with the secondary sun gear 8a.

The arrangement of the secondary satellites 8c with respect to the secondary sun gear 8a is quite similar to that of the primary satellites 7c with respect to the primary sun gear 7a, and we refer to the latter for more details.

Similar considerations apply to the number of secondary satellites 8c, which can conveniently be even more than three.

Having described the primary reduction stage 7 and the secondary reduction stage 8, it is important to specify that embodiments of the reduction unit 6 different from the one just given cannot be ruled out.

For example, it is possible to envisage a reduction unit 6 only provided with the primary reduction stage 7; in this case, therefore, the primary satellite carrier 7d can be connected to the first wheel 2 in a kinematic and direct manner, that is, without the interposition of motion transmission means 8.

In all cases, to enable the rotational speed of the wheels 2, 3 around the axis of rotation R to be varied, the appliance 1 comprises at least one regulating assembly 9 for regulating the transmission ratio of the reduction unit 6, observable in detail in Figure 8, associated with at least one of either the primary reduction stage 7 or the secondary reduction stage 8.

Preferably, the regulating assembly 9 is associated with the primary reduction stage 7.

Before going into the details of the regulating assembly 9, it is good to explain that the primary reduction stage 7 comprises a plurality of primary sun gears 7a differing from each other in the number of teeth and a plurality of primary satellites 7c differing from each other in the number of teeth and each meshable with a respective primary sun gear 7a.

In the present case, in accordance with the preferred embodiment, the primary reduction stage 7 comprises three primary sun gears 7a differing from each other in the number of teeth and three primary satellites 7c differing from each other in the number of teeth and each meshable with a respective primary sun gear 7a of the three.

By selecting one pair of the above, i.e., a primary satellite 7c and the respective primary sun gear 7a, and making them mesh with each other and with the primary crown gear 7b, it is clearly possible to vary the transmission ratio provided by the primary reduction stage 7.

In fact, as is well known, the transmission ratio is, in the planetary gears in which the sun gear is the input and the satellite carrier is the output, a function of the number of teeth of the sun gear and of the crown gear.

Therefore, by varying the number of teeth of the primary satellite 7c, it is clearly possible to vary the transmission ratio accordingly.

In this regard, one of the three primary satellites 7c has a number of teeth equal to 15, another of the three primary satellites 7c has a number of teeth equal to 21 and the remaining of the three primary satellites 7c has a number of teeth equal to 33.

Therefore, keeping in mind that the primary crown gear 7b has a number of teeth equal to 93, the transmission ratio of the primary reduction stage 7 can be made to vary between about 7.20 (in the case of a primary satellite 7c with 15 teeth), 5.43 (in the case of a primary satellite 7c with 21 teeth) and 3.82 (in the case of a primary satellite 7c with 33 teeth).

According to the preferred embodiment of the motor 4 described above, where, as mentioned, it has power of 2 kW and rotates at 3200 rpm, the speed of the first wheel 2 is substantially equal to 4.20 kilometers per hour, 4.77 kilometers per hour and 6.79 kilometers per hour depending on whether the transmission ratio of the primary reduction stage 7 is 7.20, 5.43 or 3.82, respectively.

This confirms that the rotational speed of the first wheel 2 around the axis of rotation R can be varied as a function of the number of teeth of the primary sun gear 7a and the relevant primary satellite 7c meshing with it.

In this regard, it should be pointed out that, as anticipated, the primary reduction stage 7 comprises three primary satellites 7c substantially identical with each other and simultaneously meshing with the primary sun gear 7a; it follows that the primary reduction stage 7 comprises, in total, nine primary satellites 7c, substantially equal three by three with each other.

In other words, the primary reduction stage 7 comprises three primary satellites 7c having 15 teeth, three primary satellites 7c having 21 teeth and three primary satellites 7c having 33 teeth.

It is easy to appreciate, however, how the number of primary satellites 7c and of primary sun gears 7a may be varied from what just described, and may be e.g. greater in number.

It is substantially possible to vary both the number of primary satellites 7c having equal number of teeth and the number of primary satellites 7c having different number of teeth.

Returning to describe the regulating assembly 9, it comprises a plurality of regulating holes 9a which are cut on the primary satellite carrier 7d and are arranged around the axis of rotation R.

Specifically, the regulating holes 9a are cut through on the primary satellite carrier 7d.

Specifically, there are nine regulating holes 9a, one for each primary satellite 7c.

Precisely, the regulating holes 9a are cut along directions parallel to the axis of rotation R.

In this regard, each of the regulating holes 9a is adapted to support a respective primary satellite 7c and is positioned at least at one predetermined distance D1, D2, D3 from the axis of rotation R depending on the number of teeth of the respective primary satellite 7c.

Specifically, the regulating holes 9a lie on at least one common circumference centered on the axis of rotation R and having radius coincident with the at least one predetermined distance D1, D2, D3.

In the present case, the regulating holes 9a adapted to support the primary satellites 7c with 15 teeth are arranged at a first predetermined distance D1 from the axis of rotation R (i.e. they lie on a first common circumference centered on the axis of rotation R and having a radius equal to the first predetermined distance D1).

In addition, the regulating holes 9a adapted to support the primary satellites 7c with 21 teeth are arranged at a second predetermined distance D2 from the axis of rotation R which is greater than the first predetermined distance D1 (i.e., they lie on a second common circumference centered on the axis of rotation R and having a radius equal to the second predetermined distance D2).

Similarly, the regulating holes 9a adapted to support the primary satellites 7c with 33 teeth are arranged at a third predetermined distance D3 from the axis of rotation R which is greater than the second predetermined distance D2 (i.e., they lie on a third common circumference centered on the axis of rotation R and having a radius equal to the third predetermined distance D3).

In other words, the regulating holes 9a lie on three concentric common circumferences which are centered on the axis of rotation R.

It is, therefore, sufficient to mount three primary satellites 7c having equal numbers of teeth (e.g., 15 teeth) on the three respective regulating holes 9a and connect the corresponding primary sun gear 7a to the motor 4 to have a certain transmission ratio between the motor 4 and the first wheel 2.

To vary this ratio and, consequently, the rotational speed of the first wheel 2, it is sufficient to replace the previous primary satellites 7c with three primary satellites 7c having a different number of teeth from the latter and the same number of teeth between them (e.g., 21 or 33 teeth), mounting them on the three respective regulating holes 9a, and connect the relevant primary sun gear 7a to the motor 4.

It is easy to appreciate, therefore, how the change in transmission ratio delivered by the primary reduction stage 7 is of immediate implementation and requires, in particular, only the change of four gear wheels (i.e., the three primary satellites 7c and the respective primary sun gear 7a).

This fact evidently makes it possible to regulate the speed of the wheels 2, 3 quickly and intuitively, since the above operation can be carried out in limited time and does not have any special criticality of execution.

Not only that, but such a solution proves, moreover, to be very cheap, as changing the transmission ratio does not require the replacement of the entire reduction unit 6 but only a few of its parts.

It follows that the costs associated therewith are only those related to the purchase of the few necessary gear wheels and their installation, being, therefore, insignificant.

Describing the reduction unit 6, it is good to say that the appliance 1 comprises, in addition, at least one main body 10 fixed with respect to the rotation of the wheels 2, 3 around the axis of rotation R.

First, the main body 10 comprises at least one supporting surface 11 by weight of the second wheel 3.

As visible in the figures, particularly in Figure 4, the supporting surface 11 substantially consists of an annular extension developing in a direction parallel to the axis of rotation R.

Specifically, the supporting surface 11 is substantially shaped as a right cylinder.

In this regard, the supporting surface 11 runs lengthwise (i.e., the dimension that coincides with the height of the aforementioned right cylinder) along the axis of rotation R.

Again, the supporting surface 11 is centered with respect to the axis of rotation R.

To say this is to mean that, given the cylindrical conformation of the supporting surface 11, the axis of rotation R substantially coincides with the axis of symmetry of the supporting surface itself.

It is worth pointing out that the supporting surface 11 not only enables the support of the second wheel 3 by weight, but also makes it possible for the latter to freely rotate around the axis of rotation R.

The second wheel 3 is substantially supported by the supporting surface 11 in a revolving manner, preferably by interposition of suitable friction-reducing means 12 between the two.

Precisely, the friction-reducing means 12 are placed between the second rim 3a and the supporting surface 11.

Preferably, the friction-reducing means 12 comprise one or more rotoidal bearings, such as e.g. of the ball bearing type (as shown in Figure 4) or other type known to the expert in the field.

Conveniently, the main body 10 comprises at least one auxiliary supporting surface 13 which is adapted to support the first wheel 2 by weight.

In much the same way as with the supporting surface 11, the auxiliary supporting surface 13 also substantially consists of an annular extension running in the direction parallel to the axis of rotation R.

Again, the auxiliary supporting surface 13 is substantially shaped as a right cylinder.

In this regard, the auxiliary supporting surface 13 runs lengthwise (i.e., the dimension that coincides with the height of the aforementioned right cylinder) along the axis of rotation R.

Again, the auxiliary supporting surface 13 is centered with respect to the axis of rotation R.

Similar considerations to those made for the meaning of the term "centered" regarding the supporting surface 11 are to be considered equally valid for the auxiliary supporting surface 13 and, therefore, are not repeated herein.

It is worth pointing out that the auxiliary supporting surface 13 not only allows the first wheel 2 to be supported by weight, but also allows it to rotate freely around the axis of rotation R.

The first wheel 2 is substantially supported by the auxiliary supporting surface 13 in a revolving manner, preferably by interposition of suitable auxiliary friction-reducing means 14 between the two.

Precisely, the auxiliary friction-reducing means 14 are placed between the first rim 2a and the auxiliary supporting surface 13.

Preferably, the auxiliary friction-reducing means 14 are completely identical to the friction-reducing means 12 from the structural point of view.

In this sense, the auxiliary friction-reducing means 14 also comprise one or more rotoidal bearings, e.g. of the ball bearing type (as shown in Figure 4) or other type known to the expert in the field.

It is important to draw attention at this point to the fact that providing an auxiliary supporting surface 13 proves to be a rather useful technical expedient to remedy some of the drawbacks of the prior art

In fact, the auxiliary supporting surface 13 allows the first wheel 2 to be supported efficiently and without it bearing on delicate members (such as, e.g., the reduction unit 6), thus averting any damage to them.

Therefore, the appliance 1 according to the invention is significantly more robust and durable than the aforementioned prior art.

It is noted that this fact results in a twofold benefit, since it not only increases the reliability of the appliance 1 even more effectively, but also lowers the probability of incurring expenses for the replacement of damaged or broken components.

The use of the appliance 1 on a vehicle substantially results in better drivability of the same and lower total operating costs compared to the prior art.

Resuming to describe the main body 10, it is good to add that it defines at least one housing 15 of the motor 4.

Precisely, the housing 15 is defined internally to the supporting surface 11.

It follows that the housing 15 is located inside the second wheel 3.

In actual facts, the housing 15 coincides with the hub of the second wheel 3. Preferably, the housing 15 substantially has a cylindrical conformation.

In addition, the housing 15 is provided with at least one port 15a arranged substantially where one outer side of the second wheel 3 (i.e., the side facing the opposite side from the first wheel 2) is located.

From the port 15a, the housing 15 extends inward from the appliance 1 in the direction of the first wheel 2.

As visible in Figure 4, the housing 15 is sized so as to accommodate therein the motor 4 to size.

In this regard, it is important to point out that the housing 15 coincides with the outer case 4c of the motor 4.

In other words, the stator 4a and the rotor 4b are directly housed in the housing 15 without any third component, in turn housed in the housing 15, containing the stator 4a and the rotor 4b.

This construction expedient allows achieving additional advantages over those already highlighted, including the fact of reducing the volume of the housing 15 and, consequently, of the entire appliance 1 by lowering the center of gravity of the vehicle on which the appliance itself is installed.

It is immediate to appreciate how this fact improves the drivability of the vehicle not only on flat ground but also on rough and/or uneven ground, thus allowing solving many of the problems of the prior art previously complained of.

Conveniently, the main body 10 comprises at least one inner seat 16 adapted to house the reduction unit 6.

Precisely, the seat 16 is defined internally to the auxiliary supporting surface 13. It follows that the seat 16 is positioned inside the first wheel 2.

In actual facts, the housing 15 coincides with the hub of the first wheel 2.

Preferably, the housing 15 has substantially a cylindrical conformation.

In addition, the seat 16 is provided with at least one inlet 16a arranged substantially where one outer side of the first wheel 2 (i.e., the side facing the opposite side from the second wheel 3) is located.

From the inlet 16a, the seat 16 extends inwards from the inside of the appliance 1, in the direction of the second wheel 3 and, therefore, of the housing 15.

As can be seen in Figure 4, the seat 16 is sized so as to accommodate therein the reduction unit 6 to size.

It is reiterated that providing a special seat 16 of the reduction unit 6 made within the auxiliary supporting surface 13 allows the reduction unit 6 to be protected from the weight of the first wheel 2.

In this way, possible breakage and damage of the most fragile components of the reduction unit (i.e., the gear wheels) can be avoided.

Note how this fact allows, with the same diameter of wheels 2, 3, increasing the load bearing on the appliance 1 (even by 25%) without running the mentioned risks of damage.

It is easy to appreciate how this fact greatly rewards the versatility of use of the appliance 1, which can thus be used with total efficiency in numerous configurations and operating conditions.

Conveniently, the appliance 1 comprises at least one steering assembly 17 associated with the main body 10 which is connectable to at least one vehicle and is adapted to allow the rotation of the wheels 2, 3 around at least one axis of steering S substantially orthogonal to the ground.

First of all, the steering assembly 17 comprises at least one rotating fixed element 18 and at least one rotatable structure 19, with respect to the fixed element 18, around the axis of steering S, with which the main body 10 is locked together in rotation.

As visible in the figures, the fixed element 18 comprises at least one fixed fifth wheel 18, and the rotatable structure 19 comprises at least a first sprocket 20 meshing with the fifth wheel 18.

Precisely, the fixed element 18 coincides with the fifth wheel 18.

In particular, the first sprocket 20 has a smaller diameter than the fifth wheel 18. Similarly, the first sprocket 20 has fewer teeth than the fifth wheel 18.

The steering assembly 17 then comprises at least one steering motor 21 connected to the first sprocket 20 and adapted to allow it to be driven in rotation, together with the entire rotatable structure 19, around the axis of steering S.

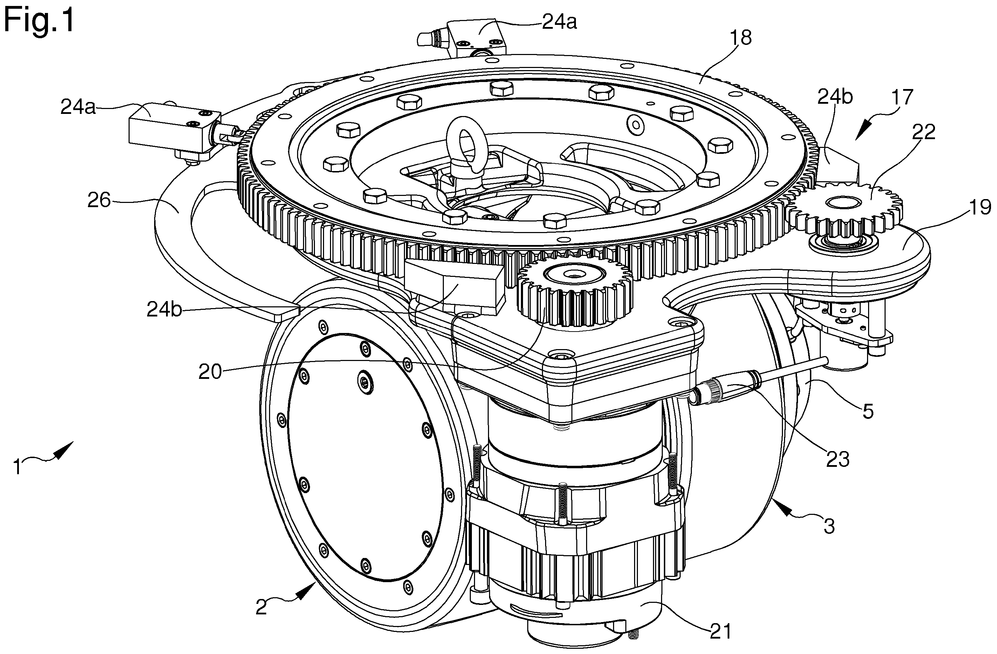

As shown in Figure 1, the steering motor 21 is attached inferiorly to the rotatable structure 19.

The above arrangement allows minimizing the overall dimensions of the steering motor 21; different arrangements of the steering motor 21 cannot however be ruled out, e.g., fixed on top of the rotatable structure 19, or mounted on the latter horizontally.

In particular, the steering motor 21 is placed at an appropriate distance from the wheels 2, 3, which averts the risk of contacting the latter.

It should be noted, in this regard, that the relevant distance between the steering motor 21 and fifth wheel 18 can be increased without altering the operation of the appliance 1 by the simple interposition, between the first sprocket 20 and the fifth wheel 18, of additional wheel gears or other transmission systems.

In all cases, note how the arrangement of the steering motor 21 under the rotatable structure 19 operates in conjunction with the connection of the housing 15 and of the outer case 4c in lowering the center of gravity of the appliance 1 and, thus, more generally, of the vehicle on which it is mounted.

Not only that, but such an arrangement also allows the space above the rotatable structure 19 to be left clear and unobstructed, either completely or even partly, which can be advantageously exploited for other uses.

Conveniently, the rotatable structure 19 also has a second sprocket 22 meshing in turn with the fifth wheel 18.

In actual facts, the second sprocket 22 is also rotatable axially and around the axis of steering S.

The geometrical characteristics of the second sprocket 22 are similar to those of the first sprocket 20, and in all cases it has a smaller diameter and number of teeth than the fifth wheel 18.

From the description given so far, it is clear to appreciate that within the steering assembly 17, the first sprocket 20 is the driving wheel and the second sprocket 22 is the driven wheel.

In actual facts, this means that the second sprocket 22 is dragged into rotation (axial and around the axis of steering S) by the rotation (axial and around the axis of steering S) of the first sprocket 20, which is in turn driven by the steering motor 21.

The second sprocket 22 is connected to at least one position sensor 23, which is attached to the rotatable structure 19 and, therefore, rotates locked together with the latter around the axis of steering S.

The position sensor 23 is of the type of an angular position transducer, better known as a "rotary encoder", and is configured to generate a digital code according to its angular position.

The digital code thus generated can, e.g., be sent to a special vehicle control unit which is programmed to read it and provide that data to a user of the vehicle itself.

The steering assembly 17 is also provided with end-of-stroke means 24a, 24b which are associated with at least one of either the rotatable structure 19 or the fifth wheel 18 and are adapted to stop the rotation of the rotatable structure 19 around the axis of steering S at least at a maximum steering angle.

Precisely, the end-of-stroke means 24a, 24b are associated both with the rotatable structure 19 and with the fifth wheel 18.

Specifically, the end-of-stroke means 24a, 24b allow the rotation of the rotatable structure 19 around the axis of steering S to be stopped in both ways of rotation; therefore, they define two maximum steering angles, one in one way of rotation and the other in the other way of rotation.

To do so, the end-of-stroke means 24a, 24b comprise at least two end-of-stroke sensors 24a.

As is clearly visible in Figure 2, the end-of-stroke sensors 24a are associated with the fifth wheel 18 (e.g., by interposition of one or more holding supports 26 of the same) and are, therefore, fixed in rotation.

Specifically, the end-of-stroke sensors 24a are of the type of end-of-stroke probes.

Again, the end-of-stroke means 24, 24b comprise at least two end-of-stroke elements 24b (visible in Figure 1 and Figure 2) associated with the rotatable structure 19 and, therefore, rotatable locked together with the latter around the axis of steering S.

Preferably, the end-of-stroke elements 24b are of the type of end-of-stroke buffers.

Specifically, each end-of-stroke element 24b is placed at a predetermined angular distance from a corresponding end-of-stroke sensor 24a.

In other words, one of the end-of-stroke elements 24b is placed at the predetermined angular distance from a first end-of-stroke sensor 24a and the other of the end-of-stroke elements 24b is placed at the same predetermined angular distance from the second end-of-stroke sensor 24a.

Specifically, this distance coincides with the previously mentioned maximum steering angle, that is, the maximum rotation which can be made by the rotatable structure 19, in one way or the other, around the axis of steering S.

Regardless of the way, in fact, the rotation of the rotatable structure 19 around the axis of steering S results in the progressive approach between one of the end-of-stroke sensors 24a and the corresponding end-of-stroke element 24b, the latter coming into contact and preventing, by virtue of this, further rotations in such way when the amplitude of such rotation equals the predetermined angular distance.

In actual facts, the wheels 2, 3 can rotate in either ways around the axis of steering S by a maximum angle which is equal to the aforementioned predetermined angular distance.

Specifically, the predetermined angular distance is comprised between 90° and 130°, better still between 100° and 120°, preferably 110°.

In this regard, it is worth pointing out that the angular distance between the end-of-stroke sensors 24a can be conveniently varied with respect to the one just given (e.g., by modifying the holding support 26).

Consequently, this also allows the predetermined angular distance to be changed, making it possible to increase or decrease the maximum steering angles of the wheels 2,3 as needed.

The appliance 1 then comprises oscillation means 25a, 25b, 25c adapted to allow the wheels 2, 3 to oscillate around at least one axis of oscillation O substantially orthogonal to the axis of rotation R and to the axis of steering S.

Specifically, the axis of oscillation O is substantially horizontal.

In actual facts, the axis of oscillation O and the axis of rotation R define a substantially horizontal plane.

Furthermore, as shown in Figure 2, the axis of oscillation O and the axis of steering S define at least one geometric median plane M (orthogonal to the substantially horizontal plane) placed between the first wheel 2 and the second wheel 3 and equidistant from the latter.

In this regard, it should be noted by observing Figure 4, that the housing 15, the auxiliary supporting surface 13 and the first wheel 2 are arranged at opposite positions to the seat 16, the supporting surface 11 and the second wheel 3, respectively, with respect to the geometric median plane M.

The geometric median plane M substantially divides the appliance 1 into two mutually opposite areas, one provided with the housing 15, the auxiliary supporting surface 13 and the first wheel 2 and the other provided with the seat 16, the supporting surface 11 and the second wheel 3.

Going into the details of the oscillation means 25a, 25b, 25c, they comprise:
- at least one first oscillation element 25a associated with the main body 10;
- at least one second oscillation element 25b associated with the steering assembly 17;
- at least one connecting element 25c coupleable to the first oscillation element 25a and to the second oscillation element 25b.

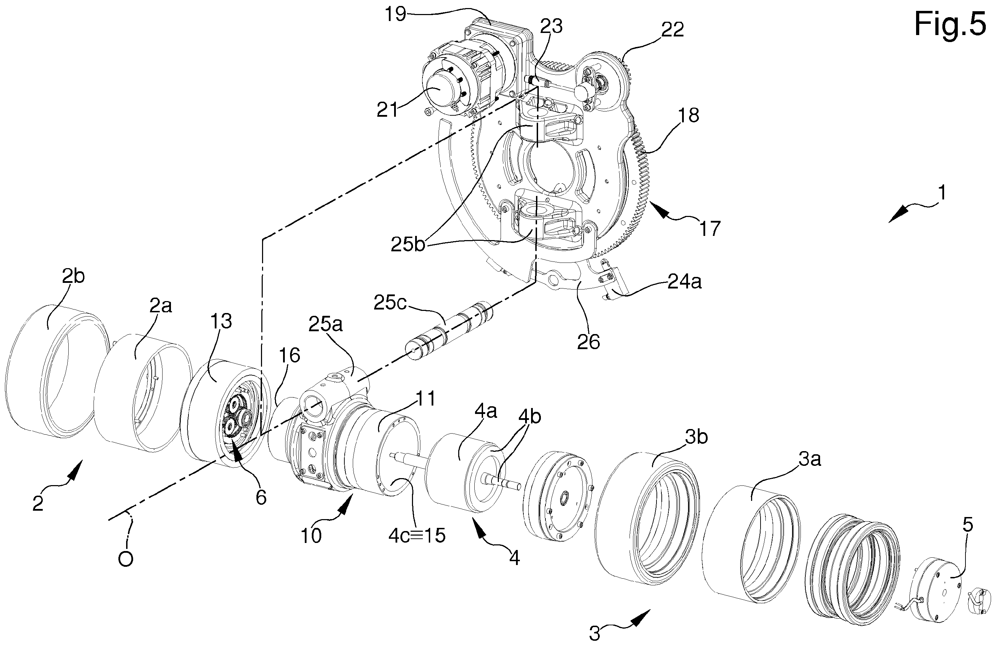

As visible in Figure 5, the first oscillation element 25a substantially consists of a sleeve, i.e., a hollow body with a substantially cylindrical conformation.

It is important to appreciate the fact that, according to the invention, the first oscillation element 25a and the main body 10 are made in a single monolithic body (see, in particular, Figure 5 in this regard).

In other words, the main body 10 defines a coupling portion with the steering assembly 17 which precisely coincides with the connecting element 25c.

Making the first oscillation element 25a and the main body 10 in a single monolithic body evidently results in a significant reduction in the construction and production complexity of the appliance 1, which acquires, among other things, a simple and compact structure.

Among other things, the same expedient proves to be quite important in reducing the possibility of damage to the first oscillation element 25a due to the prolonged use of the appliance 1.

In fact, the total absence of connecting elements between the first oscillation element 25a and the main body 10 (which are known to be potential causes of structural failure, e.g., due to mechanical fatigue), such as welds, bolts or the like, makes it possible to obtain a solid and robust appliance 1, i.e., less prone to failure and breakage than the prior art mentioned above.

As for the second oscillation element 25b, on the other hand, it is of the type of a ring attached to the rotatable structure 19.

Preferably, the oscillation means 25a, 25b, 25c comprise two second oscillation elements 25b which are placed at a distance from each other substantially equal to the length (i.e., the dimension that coincides with the height of the cylinder) of the first oscillation element 25a.

In actual facts, to connect the main body 10 to the steering assembly 17 it is sufficient to place the first oscillation element 25a between the two second oscillation elements 25b and couple, at that point, the connecting element 25c therewith, binding the first oscillation element 25a with the second oscillation elements 25b.

In this regard, the connecting element 25c is shaped so that it can be engaged through the first oscillation element 25a and the second oscillation elements 25b.

Preferably, the connecting element 25c is of the type of a pivot (as shown in Figure 5), or a functionally similar cylindrical body, possibly coupled to the first oscillation element 25a and/or to the second oscillation elements 25b by means of the interposition of one or more bushings which allow reducing rotational friction.

It is evident from what has been described so far that the oscillation means 25a, 25b, 25c allow the wheels 2, 3 to go along with the conformation of the ground on which they move, oscillating around the axis of rotation R in one way or the other and spontaneously returning to their original position in areas of flat ground.

From this, it follows that the oscillation means 25a, 25b, 25c operate in conjunction with the arrangements previously described to enable smooth and comfortable driving of the vehicle on which the appliance 1 is mounted, even if the vehicle runs over grounds that have unevenness and/or roughness.

To further improve the vehicle movement on such grounds, the oscillation means 25a, 25b, 25c can be functionally combined with self-leveling means (not shown in the figures) of the wheels 2, 3.

For example, the self-leveling means may comprise one or more hydraulic cylinders adapted to enable the cushioning of the oscillation of the wheels 2, 3 around the axis of oscillation O and their return to the aforementioned original position.

In actual facts, thanks to the operation of the oscillation means 25a, 25b, 25c in conjunction with the self-leveling means, the vehicle provided with the appliance 1 of the invention can move smoothly over any ground, regardless of its conformation.

In fact, the wheels 2, 3 can tilt to follow the course of the ground where it has unevenness and then spontaneously return to their original position in areas where the ground is level.

It has in practice been ascertained that the described invention achieves the intended objects.

In particular, the fact is emphasized that the special expedient of making the main body and the first oscillation element as a single monolithic body makes it possible to obtain an appliance with simple construction and lower production cost.

In addition, the special expedient of providing an auxiliary supporting surface on which the first wheel is placed in support makes it possible to obtain a robust and compact appliance capable of bearing greater vertical loads than the prior art mentioned above, with the same overall dimensions.

Finally, the special expedient of matching the case of the electric motor with the housing of the same makes it possible to greatly reduce the vertical overall dimensions of the appliance, lowering the center of gravity of the load and thus improving the stability and drivability of the vehicle on which the appliance is installed.

## Claims

1. Appliance (1) with motorized wheels, comprising:
- at least one pair of wheels (2, 3) axially rotatable around at least one axis of rotation (R) and comprising at least one first wheel (2) and at least one second wheel (3);
- at least one gearmotor (4, 6) operatively associated with at least said first wheel (2) for rotational drive and comprising at least one motor (4) and at least one reduction unit (6) positioned between said motor (4) and said first wheel (2);
- at least one hollow main body (10) defining at least one housing (15) of said motor (4) and comprising at least one supporting surface (11) of said second wheel (3) by weight;
- at least one steering assembly (17) associated with said main body (10) which is connectable to at least one vehicle and is adapted to allow the rotation of said wheels (2, 3) around at least one axis of steering (S) substantially orthogonal to the ground;
- oscillation means (25a, 25b, 25c) adapted to allow said wheels (2, 3) to oscillate around at least one axis of oscillation (O) substantially orthogonal to said axis of rotation (R) and to said axis of steering (S), comprising:
- at least one first oscillation element (25a) associated with said main body (10);
- at least one second oscillation element (25b) associated with said steering assembly (17);
- at least one connecting element (25c) coupleable to said first oscillation element (25a) and to said second oscillation element (25b);
**characterized by** the fact that said main body (10) and said first oscillation element (25a) are made in a single monolithic body.

2. Appliance (1) according to claim 1, **characterized by** the fact that said main body (10) comprises at least one auxiliary supporting surface (13) which is adapted to support said first wheel (2) by weight.

3. Appliance (1) according to one or more of the preceding claims, **characterized by** the fact that said main body (10) comprises at least one inner seat (16) adapted to house said reduction unit (6).

4. Appliance (1) according to one or more of the preceding claims, **characterized by** the fact that said axis of steering (S) and said axis of oscillation (O) define at least one geometric median plane (M) and by the fact that said housing (15), said auxiliary supporting surface (13) and said first wheel (2) are arranged in a position opposite said seat (16), said supporting surface (11) and said second wheel (3) respectively, with respect to said geometric median plane (M).

5. Appliance (1) according to one or more of the preceding claims, **characterized by** the fact that said reduction unit (6) comprises at least one primary reduction stage (7) of the type of a planetary gear provided with:
- at least one primary sun gear (7a) operatively connected to said motor (4) and rotatable around said axis of rotation (R);
- at least one primary crown gear (7b) fixed in rotation and coaxial to said primary sun gear (7a);
- at least one primary satellite (7c) which meshes with said primary sun gear (7a) and with said primary crown gear (7b); and with
- at least one primary satellite carrier (7d), rotatable around said axis of rotation (R) and supporting said primary satellite (7c), connected to said first wheel (2) via motion transmission means (8).

6. Appliance (1) according to claim 5, **characterized by** the fact that said reduction unit (6) comprises at least one secondary reduction stage (8) of the type of a planetary gear coinciding with said motion transmission means (8) and is operatively positioned between said primary reduction stage (7) and said first wheel (2), provided with:
- at least one secondary sun gear (8a) locked together with said primary satellite carrier (7d);
- at least one secondary crown gear (8b) fixed in rotation and coaxial to said secondary sun gear (8a);
- at least one secondary satellite (8c) which meshes with said secondary sun gear (8a) and with said secondary crown gear (8b); and with
- at least one secondary satellite carrier (8d), rotatable around said axis of rotation (R) and supporting said secondary satellite (8c), connected to said first wheel (2).

7. Appliance (1) according to claim 5 or 6, **characterized by** the fact that it comprises at least one regulating assembly (9) for regulating the transmission ratio of said reduction unit (6) associated with at least one of either said primary reduction stage (7) or said secondary reduction stage (8).

8. Appliance (1) according to claim 7, **characterized by** the fact that:
- said primary reduction stage (7) comprises a plurality of said primary sun gears (7a) differing from each other in the number of teeth and a plurality of primary satellites (7c) differing from each other in the number of teeth and each meshable with a respective said primary sun gear (7a);
- said regulating assembly (9) comprises a plurality of regulating holes (9a) which are cut on said primary satellite carrier (7d) and are arranged around said axis of rotation (R), each of said regulating holes (9a) being adapted to support a respective said primary satellite (7c) and being positioned at least at a predetermined distance (D1, D2, D3) from said axis of rotation (R) depending on the number of teeth of the respective said primary satellite (7c).

9. Appliance (1) according to one or more of the preceding claims, **characterized by** the fact that:
- said motor (4) is of the electric type and comprises at least one stator (4a), at least one rotor (4b) and at least one outer case (4c) housing said stator (4a) and said rotor (4b);
- said housing (15) coincides with said outer case (4c).

10. Appliance (1) according to claim 9, **characterized by** the fact that said motor (4) is of the type of an electric brushless AC motor.

## Patentansprüche

1. Vorrichtung (1) mit motorisierten Rädern, umfassend:
- mindestens ein Paar Räder (2, 3), die um mindestens eine Drehachse (R) axial drehbar sind und mindestens ein erstes Rad (2) und mindestens ein zweites Rad (3) umfassen;
- mindestens einen Getriebemotor (4, 6), der mit mindestens dem ersten Rad (2) zum Drehantrieb wirkverbunden ist und mindestens einen Motor (4) und mindestens eine Untersetzungseinheit (6) umfasst, die zwischen dem Motor (4) und dem ersten Rad (2) angeordnet ist;
- mindestens einen hohlen Hauptkörper (10), der mindestens ein Gehäuse (15) für den Motor (4) bildet und mindestens eine Stützfläche (11) für das Gewicht des zweiten Rads (3) umfasst;
- mindestens eine mit dem Hauptkörper (10) verbundene Lenkvorrichtung (17), die mit mindestens einem Fahrzeug verbindbar und ausgebildet ist, die Drehung der Räder (2, 3) um mindestens eine Lenkachse (S) zu ermöglichen, die im Wesentlichen orthogonal zu dem Untergrund ist;
- Schwingungsmittel (25a, 25b, 25c), die ausgebildet sind, eine Schwingung der Räder (2, 3) um mindestens eine Schwingungsachse (O) zu ermöglichen, die im Wesentlichen orthogonal zu der Drehachse (R) und zu der Lenkachse (S) ist, umfassend:
- mindestens ein erstes Schwingungselement (25a), das mit dem Hauptkörper (10) verbunden ist;
- mindestens ein zweites Schwingungselement (25b), das mit der Lenkvorrichtung (17) verbunden ist;
- mindestens ein Verbindungselement (25c), das mit dem ersten Schwingungselement (25a) und dem zweiten Schwingungselement (25b) verbindbar ist;
**dadurch gekennzeichnet, dass** der Hauptkörper (10) und das erste Schwingungselement (25a) als ein einziger monolithischer Körper ausgebildet sind.

2. Vorrichtung (1) nach Anspruch 1, **dadurch gekennzeichnet, dass** der Hauptkörper (10) mindestens eine Hilfsstützfläche (13) umfasst, die ausgebildet ist, das Gewicht des ersten Rads (2) zu tragen.

3. Vorrichtung (1) nach einem oder mehreren der vorhergehenden Ansprüche, **dadurch gekennzeichnet, dass** der Hauptkörper (10) mindestens einen inneren Sitz (16) umfasst, der ausgebildet ist, die Untersetzungseinheit (6) aufzunehmen.

4. Vorrichtung (1) nach einem oder mehreren der vorhergehenden Ansprüche, **dadurch gekennzeichnet, dass** die Lenkachse (S) und die Schwingungsachse (O) mindestens eine geometrische Mittelebene (M) definieren und dadurch, dass das Gehäuse (15), die Hilfsstützfläche (13) und das erste Rad (2) in einer Position gegenüber dem Sitz (16), der Stützfläche (11) bzw. dem zweiten Rad (3) in Bezug auf die geometrische Mittelebene (M) angeordnet sind.

5. Vorrichtung (1) nach einem oder mehreren der vorhergehenden Ansprüche, **dadurch gekennzeichnet, dass** die Untersetzungseinheit (6) mindestens eine primäre Untersetzungsstufe (7) vom Typ eines Planetengetriebes umfasst, das versehen ist mit:
- mindestens einem primären Sonnenrad (7a), das mit dem Motor (4) in Wirkverbindung steht und um die Drehachse (R) drehbar ist;
- mindestens einem primären Hohlrad (7b), das drehfest und koaxial zu dem primären Sonnenrad (7a) angeordnet ist;
- mindestens einem primären Planetenrad (7c), das mit dem primären Sonnenrad (7a) und dem primären Hohlrad (7b) kämmt; und
- mindestens einem primären Planetenradträger (7d), der um die Drehachse (R) drehbar ist und das primäre Planetenrad (7c) trägt, das über Bewegungsübertragungsmittel (8) mit dem ersten Rad (2) verbunden ist.

6. Vorrichtung (1) nach Anspruch 5, **dadurch gekennzeichnet, dass** die Untersetzungseinheit (6) mindestens eine sekundäre Untersetzungsstufe (8) vom Typ eines Planetengetriebes umfasst, das mit den Bewegungsübertragungsmitteln (8) übereinstimmt und funktionsmäßig zwischen der primären Untersetzungsstufe (7) und dem ersten Rad (2) angeordnet ist, das versehen ist mit:
- mindestens einem sekundären Sonnenrad (8a), das mit dem primären Planetenradträger (7d) verbunden ist;
- mindestens einem sekundären Hohlrad (8b), das drehfest und koaxial zu dem sekundären Sonnenrad (8a) angeordnet ist;
- mindestens einem sekundären Planetenrad (8c), das mit dem sekundären Sonnenrad (8a) und dem sekundären Hohlrad (8b) kämmt; und
- mindestens einem sekundären Planetenradträger (8d), der um die Drehachse (R) drehbar ist und das sekundäre Planetenrad (8c) trägt, das mit dem ersten Rad (2) verbunden ist.

7. Vorrichtung (1) nach Anspruch 5 oder 6, **dadurch gekennzeichnet, dass** sie mindestens eine Regeleinheit (9) zum Regeln des Übersetzungsverhältnisses der Untersetzungseinheit (6) umfasst, die mit mindestens einer der primären Untersetzungsstufe (7) oder der sekundären Untersetzungsstufe (8) verbunden ist.

8. Vorrichtung (1) nach Anspruch 7, **dadurch gekennzeichnet, dass**:
- die primäre Untersetzungsstufe (7) mehrere primäre Sonnenräder (7a), die sich in der Anzahl ihrer Zähne voneinander unterscheiden, und mehrere primäre Planetenräder (7c) umfasst, die sich in der Anzahl ihrer Zähne voneinander unterscheiden und jeweils mit einem entsprechenden primären Sonnenrad (7a) in Eingriff bringbar sind;
- die Regeleinheit (9) mehrere Regelungslöcher (9a) umfasst, die in den primären Planetenträger (7d) geschnitten und um die Drehachse (R) herum angeordnet sind, wobei jedes der Regelungslöcher (9a) ausgebildet ist, ein entsprechendes primäres Planetenrad (7c) zu tragen, und mindestens in einem vorbestimmten Abstand (D1, D2, D3) von der Drehachse (R) entfernt ist, abhängig von der Anzahl der Zähne des jeweiligen primären Planetenrads (7c).

9. Vorrichtung (1) nach einem oder mehreren der vorhergehenden Ansprüche, **dadurch gekennzeichnet, dass**:
- der Motor (4) elektrisch ist und mindestens einen Stator (4a), mindestens einen Rotor (4b) und mindestens ein Außengehäuse (4c) umfasst, das den Stator (4a) und den Rotor (4b) aufnimmt;
- das Gehäuse (15) mit dem Außengehäuse (4c) übereinstimmt.

10. Vorrichtung (1) nach Anspruch 9, **dadurch gekennzeichnet, dass** der Motor (4) ein bürstenloser Wechselstrommotor ist.

## Revendications

1. - Appareil (1) doté de roues motorisées, comprenant :
- au moins une paire de roues (2, 3) aptes à tourner axialement autour d'au moins un axe de rotation (R) et comprenant au moins une première roue (2) et au moins une seconde roue (3) ;
- au moins un motoréducteur (4, 6) associé de manière fonctionnelle à au moins ladite première roue (2) pour un entraînement en rotation et comprenant au moins un moteur (4) et au moins une unité de réduction (6) positionnée entre ledit moteur (4) et ladite première roue (2) ;
- au moins un corps principal creux (10) définissant au moins un boîtier (15) dudit moteur (4) et comprenant au moins une surface de support (11) de ladite seconde roue (3) en termes de poids ;
- au moins un ensemble de direction (17) associé audit corps principal (10) qui est apte à être relié à au moins un véhicule et est apte à permettre la rotation desdites roues (2, 3) autour d'au moins un axe de direction (S) sensiblement orthogonal au sol ;
- des moyens d'oscillation (25a, 25b, 25c) aptes à permettre auxdites roues (2, 3) d'osciller autour d'au moins un axe d'oscillation (0) sensiblement orthogonal audit axe de rotation (R) et audit axe de direction (S), comprenant :
- au moins un premier élément d'oscillation (25a) associé audit corps principal (10) ;
- au moins un second élément d'oscillation (25b) associé audit ensemble de direction (17) ;
- au moins un élément de liaison (25c) apte à être couplé audit premier élément d'oscillation (25a) et audit second élément d'oscillation (25b) ;
**caractérisé par le fait que** ledit corps principal (10) et ledit premier élément d'oscillation (25a) sont réalisés en un seul corps monobloc.

2. - Appareil (1) selon la revendication 1, **caractérisé par le fait que** ledit corps principal (10) comprend au moins une surface de support auxiliaire (13) qui est apte à supporter ladite première roue (2) en termes de poids.

3. - Appareil (1) selon l'une ou plusieurs des revendications précédentes, **caractérisé par le fait que** ledit corps principal (10) comprend au moins un siège interne (16) apte à recevoir ladite unité de réduction (6).

4. - Appareil (1) selon l'une ou plusieurs des revendications précédentes, **caractérisé par le fait que** ledit axe de direction (S) et ledit axe d'oscillation (0) définissent au moins un plan médian géométrique (M) et **par le fait que** ledit boîtier (15), ladite surface de support auxiliaire (13) et ladite première roue (2) sont disposés dans une position opposée respectivement audit siège (16), à ladite surface de support (11) et à ladite seconde roue (3), par rapport audit plan médian géométrique (M).

5. - Appareil (1) selon l'une ou plusieurs des revendications précédentes, **caractérisé par le fait que** ladite unité de réduction (6) comprend au moins un étage de réduction primaire (7) du type d'un train planétaire comportant :
- au moins une roue solaire primaire (7a) reliée de manière fonctionnelle audit moteur (4) et apte à tourner autour dudit axe de rotation (R) ;
- au moins une couronne dentée primaire (7b) fixe en rotation et coaxiale à ladite roue solaire primaire (7a) ;
- au moins un satellite primaire (7c) qui s'engrène avec ladite roue solaire primaire (7a) et avec ladite couronne dentée primaire (7b) ; et
- au moins un porte-satellite primaire (7d), apte à tourner autour dudit axe de rotation (R) et portant ledit satellite primaire (7c), relié à ladite première roue (2) par l'intermédiaire de moyens de transmission de mouvement (8).

6. - Appareil (1) selon la revendication 5, **caractérisé par le fait que** ladite unité de réduction (6) comprend au moins un étage de réduction secondaire (8) du type d'un train planétaire coïncidant avec lesdits moyens de transmission de mouvement (8) et qui est positionné de manière fonctionnelle entre ledit étage de réduction primaire (7) et ladite première roue (2), comportant :
- au moins une roue solaire secondaire (8a) verrouillée conjointement avec ledit porte-satellite primaire (7d) ;
- au moins une couronne dentée secondaire (8b) fixe en rotation et coaxiale à ladite roue solaire secondaire (8a) ;
- au moins un satellite secondaire (8c) qui s'engrène avec ladite roue solaire secondaire (8a) et avec ladite couronne dentée secondaire (8b) ; et
- au moins un porte-satellite secondaire (8d), apte à tourner autour dudit axe de rotation (R) et portant ledit satellite secondaire (8c), relié à ladite première roue (2).

7. - Appareil (1) selon la revendication 5 ou 6, **caractérisé par le fait qu'**il comprend au moins un ensemble de régulation (9) pour réguler le rapport de transmission de ladite unité de réduction (6) associée à au moins l'un dudit étage de réduction primaire (7) et dudit étage de réduction secondaire (8).

8. - Appareil (1) selon la revendication 7, **caractérisé par le fait que** :
- ledit étage de réduction primaire (7) comprend une pluralité desdites roues solaires primaires (7a) différant les unes des autres dans le nombre de dents et une pluralité de satellites primaires (7c) différant les uns des autres dans le nombre de dents et aptes à s'engrener chacun avec une roue solaire primaire précité respective (7a) ;
- ledit ensemble de régulation (9) comprend une pluralité de trous de régulation (9a) qui sont découpés sur ledit porte-satellite primaire (7d) et sont disposés autour dudit axe de rotation (R), chacun desdits trous de régulation (9a) étant apte à supporter un satellite primaire précité respectif (7c) et étant positionné au moins à une distance prédéterminée (D1, D2, D3) vis-à-vis dudit axe de rotation (R) en fonction du nombre de dents dudit satellite primaire précité respectif (7c).

9. - Appareil (1) selon l'une ou plusieurs des revendications précédentes, **caractérisé par le fait que** :
- ledit moteur (4) est du type électrique et comprend au moins un stator (4a), au moins un rotor (4b) et au moins un carter externe (4c) recevant ledit stator (4a) et ledit rotor (4b) ;
- ledit boîtier (15) coïncide avec ledit carter externe (4c).

10. - Appareil (1) selon la revendication 9, **caractérisé par le fait que** ledit moteur (4) est du type d'un moteur électrique à courant alternatif sans balais.
